# FASCICULE DE BREVET EUROPEEN

(11) **EP 2 493 688 B1**
(45) Date de publication et mention de la délivrance du brevet: **26.12.2018**
(21) Numéro de dépôt: 10792954.9
(22) Date de dépôt: 29.10.2010
(51) Int. Cl.: B32B 27/08, B65D 65/40

(54) **FILM MULTICOUCHE DE PAROI DE POCHE A SOUDURES DESTINEE A UN PRODUIT BIOPHARMACEUTIQUE**
MEHRSCHICHTIGE FOLIE EINER WAND EINES BEUTELS MIT NÄHTEN FÜR BIOPHARMAZEUTISCHES PRODUKT
MULTILAYER FILM OF A WALL OF A BAG HAVING SEAMS AND INTENDED FOR A BIOPHARMACEUTICAL PRODUCT

(30) Priorité: 29.10.2009 FR 0957610
(43) Date de publication de la demande: 05.09.2012
(73) Titulaire: SARTORIUS STEDIM FMT SAS, 13400 Aubagne (FR)
(72) Inventeur: BARBAROUX, Magali, F-13112 La Destrousse (FR); CHEVALIER, Eric, F-13008 Marseille (FR); WASTERLAIN, Steve, B-7110 Houdeng-Goegnies Hainaut (BE)
(74) Mandataire: Derambure, Christian
(86) Numéro de dépôt international: PCT/FR2010/052336
(87) Numéro de publication internationale: WO 2011/051638

(56) Documents cités:
- EP-A1- 2 100 729
- EP-A2- 0 859 025
- WO-A1-2007/121590
- CA-A1- 2 264 463
- DE-A1- 10 326 498
- FR-A1- 2 828 435
- JP-A- 8 277 335
- JP-A- 59 078 817
- US-A1- 2003 096 128
- US-A1- 2009 061 061
- DATABASE WPI Week 199649 Thomson Scientific, London, GB; AN 1996-492506 XP002589198, & JP 8 252298 A (FUJIMORI IND CO LTD) 1 octobre 1996 (1996-10-01)

## Description

L'invention est relative au processus de fabrication et à la constitution des poches comportant des soudures et spécialement destinées à être emplies de produits biopharmaceutiques.

L'invention a plus particulièrement pour objet une poche comportant une paroi formant enveloppe en un film multicouche final comprenant un film contact et un film fonctionnel multicouche.

On entend ici par produit biopharmaceutique, un produit issu de la biotechnologie - milieux de cultures, cultures cellulaires, solutions tampon, liquides de nutrition artificielle, produits sanguins et dérivés de produits sanguins - ou un produit pharmaceutique ou plus généralement un produit destiné à être utilisé dans le domaine médical.

Aux fins d'élaboration ou de conservation d'un tel produit biopharmaceutique, on connaît un processus consistant à le placer dans une poche faisant partie d'un dispositif spécialement destiné à cette fin. Un tel dispositif comprend la poche en question, et au moins un organe fonctionnel, dont au moins un port (entrée ou sortie), et, le cas échéant, un ou plusieurs dispositifs de mélange, aération...

On connaît de telles poches dont les deux grandes parois soudées l'une à l'autre. Une fois expansées, elles ont un volume limité et restent relativement peu épaisses, ce qui justifie qu'on les appelle souvent poches 2D (D signifiant dimensions). On connaît aussi des poches 3D qui comportent deux parois d'extrémité et une paroi latérale pouvant être pliée à plat ou dépliée déployée, soudées entre elles, le volume pouvant atteindre 3.000 litres, voire plus. De telles poches 3D sont décrites dans le document WO00/04131 ou commercialisées par la société Sartorius sous la marque FLEXEL® 3D. Les parois des poches comportent des soudures, au moins sur elles-mêmes et sur le au moins un organe fonctionnel.

Les parois des poches sont essentiellement continues dans leur ensemble et comportent une face extérieure en contact avec l'environnement extérieur de la poche et une face intérieure avec laquelle est en contact le produit pharmaceutique emplissant la poche.

Une telle paroi de poche doit avoir une propriété barrière à haut degré d'étanchéité aux gaz. De par sa robustesse, elle doit être apte mécaniquement à contenir le produit biopharmaceutique se trouvant dans la poche, dont le volume peut être plus ou moins important. Elle doit également être de nature à éviter les interactions indésirables avec l'environnement ou le produit biopharmaceutique, par exemple lors de la fabrication, du transport ou du stockage. Elle doit être propre, notamment au regard des particules ou sous l'angle biologique. Elle doit être non dégradable et présenter une haute résistance chimique. Elle doit être apte, également, à permettre que l'élaboration ou la conservation du produit biopharmaceutique soit assuré avec sécurité. Elle doit pouvoir être soudée, comme précédemment indiqué. Elle doit pouvoir être, aisément et sans détérioration, pliée et dépliée. Elle doit présenter des qualités au regard notamment de l'adhérence, de la souplesse, de l'opacité ou au contraire de la transparence, ces caractéristiques n'étant nullement exclusives d'autres. Enfin, l'approvisionnement des poches doit pouvoir être assuré en temps, en quantité et en qualité, ce qui implique que les films constitutifs des parois soient eux-mêmes disponibles en temps, en quantité et en qualité. Cette exigence nécessite de recourir à un nombre limité de technologies et d'opérations, à partir de composants aisément combinables selon les structures requises. Elle nécessite également d'éviter les goulots d'étranglement d'approvisionnement, de logistique et de fabrication. Elle nécessite également que le fabricant de la poche ait un contrôle étroit sur les points clés du processus conduisant à l'élaboration de la poche.

On sait qu'une telle paroi de poche est réalisée à partir d'un film multicouche, ici appelé indifféremment « film multicouche final » ou « film final ». Un tel film combine plusieurs couches de matières choisies pour remplir les différentes exigences attendues du film multicouche final. Ces couches sont solidarisées les unes avec les autres, par lamination ou coextrusion.

L'utilisateur final d'un tel film multicouche final est le plus souvent très soucieux de la sécurité à long terme de son approvisionnement. Il souhaite pouvoir contrôler les résines à partir desquelles les films sont fabriqués, mais aussi le processus de fabrication du film.

En outre, l'utilisateur final souhaite optimiser les prix de revient et les plateformes technologiques. Il souhaite limiter les opérations de validations rendues nécessaires pour toute nouvelle structure film multicouche final, notamment toute nouvelle structure dans laquelle est modifiée la couche au contact avec le produit biopharmaceutique.

Enfin, l'utilisateur final souhaite avoir à disposition des films adaptés aux exigences de plus en plus grandes de flexibilité en ce qui concerne la structure du film multicouche final, l'importance des séries fabriquées, et adapté également aux exigences de design des poches, et ce dans le cadre d'un nombre limité de plateformes technologiques et les contraintes précédemment indiquées.

En effet, en matière d'utilisation des poches pour le domaine biopharmaceutique, il existe une exigence de polyvalence en fonction notamment du produit biopharmaceutique (nature, élaboration, conditions de conservation...), des caractéristiques de la poche (capacité, forme, conditions d'usage, applications réalisées à l'aide de la poche (stockage, mélange, bioréaction...)...). Cette polyvalence ne peut être obtenue à partir d'une seule et unique structure de film multicouche final, du moins à des conditions économiques acceptables. Il est donc nécessaire de prévoir une grande variété de films multicouche finals de sorte à pouvoir répondre à la grande polyvalence des usages souhaités.

Le document US 6361843 décrit une structure particulière de film multicouche final, formant une entité en soi, comprenant une couche centrale, une couche contact interne et une couche externe, chacune en une matière choisie, et deux couches de liaison assurant la liaison entre la couche centrale et d'un côté, la couche contact interne et de l'autre côté la couche externe. Un tel film multicouche final est réalisé par coextrusion.

Le document US 5 164 258 décrit une structure analogue réalisée par coextrusion ou lamination.

De telles structures particulières ne permettent pas la polyvalence d'usage souhaitée, laquelle ne peut être satisfaite qu'en disposant d'autant de structures particulières que d'usages particuliers envisagés, avec tous les inconvénients qui en résultent : nécessité de fabriquer, stocker, transporter et gérer une gamme étendue de films, risque de rupture de la chaîne d'approvisionnement en film, coût, manque de flexibilité. En outre, chaque structure particulière, en tant que produit fini fourni au client final étant différente des autres, nécessite d'être testée et approuvée, même si la couche interne de contact avec le produit biopharmaceutique est toujours la même.

Le document EP-A-0698487 propose l'utilisation d'une pellicule étanche multicouche ayant comme couche la plus à l'intérieur une première couche constituée d'au moins une résine telle que le polyéthylène basse densité ou le polypropylène, une troisième couche en copolymère d'éthylène alcool et vinyle étant stratifiée sur le côté externe de la première couche, une deuxième couche servant de couche adhésive entre la première et la troisième couches, afin d'empêcher les contaminants de migrer depuis l'extérieur de la troisième couche vers la première couche. Le cas échéant, il est prévu une quatrième, une cinquième couche.

Le document EP-A-2 100 729 décrit un film multicouche pour la production d'une poche de produits médicamenteux présentant une couche extérieure, une couche intérieure scellable et des couches intermédiaires co-extrudées.

Le document FR-A-2 828 435 concerne le domaine de l'industrie agro-alimentaire et s'intéresse à l'operculage de barquettes et au conditionnement où les produits à emballer sont introduits dans un tunnel formé par le film, lequel est ensuite soudé transversalement, sectionné, puis éventuellement rétracté. Il décrit la réalisation d'un film multicouche composé d'un premier film orienté et non stabilisé thermiquement et d'un second film soudant non orienté associés l'un à l'autre par lamination.

Le document JP 1996-492506 se rapporte à une poche pour des liquides médicamenteux, comprenant, d'une part, un film multicouche réalisé par lamination d'une couche plastique, d'une couche de résine et d'une couche de PE ou de PP et, d'autre part, un film monocouche scellable de PE ou de PP fixé par fusion sur la couche de PE ou de PP du film multicouche.

Le document US-A-2009/0061061 se rapport à un film multicouches présentant des fonctions barrières à l'oxygène.

Les documents CA-A-2 264 463, WO-A-2007/121590, EP-A-0 859 025, DE-A-103 26 498, US-A-2003/096128, JP-A-59 078817 et JP-A-8277335 se rapportent à des films monocouches aptes à entrer dans la composition de films multicouches de parois de poches.

L'invention se situe dans le cadre des poches comportant des soudures et destinées à être emplies de produit biopharmaceutique. Dans ce cadre, le problème à la base de l'invention est de répondre aux exigences rappelées plus haut concernant la fonctionnalité du film multicouche final, la flexibilité et l'adaptabilité avec un nombre limité de films ou de matières premières, la sécurité de l'approvisionnement, le contrôle du film multicouche final et de son processus de fabrication, le prix de revient.

La solution apportée repose sur le concept inventif consistant à associer et solidariser - en l'espèce par lamination - un film contact monocouche et un film fonctionnel multicouche, préparés à l'avance.

Le film contact monocouche est:
▪ constitué d'une matière choisie apte à :
   ∘ entrer dans la constitution d'un film multicouche final de paroi de poche,
   ∘ être au contact du produit biopharmaceutique, sans dégradation du film et du produit biopharmaceutique,
   ∘ être soudable sur elle-même,
▪ d'une épaisseur inférieure à l'épaisseur d'une couche unique de contact - par exemple d'un film multicouche final - de paroi de poche appropriée à la réalisation de soudures de la couche unique de contact sur elle-même,
▪ dont l'une des faces a pour fonction d'être une interface de solidarisation avec une première interface de solidarisation du film fonctionnel multicouche,
▪ dont l'autre des faces a pour fonction finale de constituer la face de contact du film multicouche final avec le produit biopharmaceutique.

La matière constitutive de la couche contact monocouche est choisie dans la famille comprenant le polyéthylène (PE) et notamment le polyéthylène à basse densité linéaire (LLDPE), le polyéthylène vinyle acétate (EVA), le polypropylène (PP), l'éthylène-tétrafluoroéthylène (ETFE), le polyfluorure de vinylidène (PVDF) et les matériaux équivalents, dans le cadre de l'application considérée.

Le film fonctionnel multicouche:
▪ comprend au moins une couche de base de la même matière que le film contact monocouche et d'une épaisseur inférieure à l'épaisseur d'une couche unique de contact - par exemple d'un film multicouche final - de paroi de poche appropriée à la réalisation de soudures de la couche unique de contact sur elle-même,
   ∘ dont l'une des faces a pour fonction d'être la première interface de solidarisation avec l'interface de solidarisation du film contact monocouche ou d'un autre film fonctionnel multicouche de structure identique ou non,
   ∘ dont l'autre des faces a pour fonction d'être une seconde interface de solidarisation avec une interface de solidarisation d'une couche fonctionnelle adjacente,
▪ et comprend au moins une couche fonctionnelle dont au moins une couche barrière aux gaz non dégradable à elle seule ou par association à une couche protectrice.

Dans les réalisations considérées, le film fonctionnel multicouche comprend une pluralité de couches fonctionnelles superposées, choisies pour leur fonction de flexibilité, de robustesse, de manipulation, d'opacité ou au contraire de transparence.

Les matériaux constitutifs des couches fonctionnelles sont choisis dans la famille comprenant le polyéthylène (PE) et notamment le polyéthylène à basse densité linéaire (LLDPE) ou le polyéthylène téréphtalate (PET), un polyamide (PA), le polyéthylène vinyle acétate (EVA), l'éthylène-alcool vinylique (EVOH), le styrène éthylène butadiène-styrène (SEBS), le polyéthylène téréphtalate glycol (PETG), le polyfluorure de vinylidène (PVDF) ou encore l'aluminium et les matériaux équivalents, dans le cadre de l'application considérée.

Des couches fonctionnelles - ou agrégations de couches fonctionnelles - en de tels matériaux sont associées de toute manière appropriée, en fonction des matériaux employés, tel que coextrusion ou lamination, le cas échéant avec présence d'une couche d'interface de liaison et d'association appropriée.

Le procédé de fabrication d'un film multicouche final de paroi de poche est tel que :
▪ d'une part, on fabrique ou dispose d'un film contact monocouche,
▪ d'autre part, on fabrique ou dispose d'un film fonctionnel multicouche,
▪ et on solidarise le film contact monocouche et le film fonctionnel multicouche, l'une des faces du film contact monocouche formant interface étant solidarisée à la face extérieure de la couche de base du film fonctionnel multicouche - de la même matière que le film contact monocouche -, formant première interface, et ce, par lamination.

Plus particulièrement, le procédé de fabrication d'un film multicouche final de paroi de poche - poche comportant des soudures au moins sur elle-même et destinée à être emplie de produit biopharmaceutique -, est tel que :
d'une part, on fabrique ou dispose d'un film contact monocouche :
   ▪ constitué d'une matière choisie apte à :
      ∘ entrer dans la constitution du film multicouche final de paroi de poche,
      ∘ être au contact du produit biopharmaceutique, sans dégradation du film et du produit biopharmaceutique,
      ∘ être soudable sur elle-même,
   ▪ d'une épaisseur inférieure à l'épaisseur d'une couche unique de contact de paroi de poche appropriée à la réalisation de soudures de la couche unique de contact sur elle-même,
   ▪ dont l'une des faces a pour fonction d'être une interface de solidarisation avec une première interface de solidarisation du film fonctionnel multicouche,
   ▪ dont l'autre des faces a pour fonction finale de constituer la face de contact du film multicouche final avec le produit biopharmaceutique ;
d'autre part, on fabrique ou dispose d'un film fonctionnel multicouche :
   ▪ comprenant au moins une couche de base de la même matière que le film contact monocouche ou d'une matière apte à être associée à celle du film contact monocouche par lamination,
   ▪ et d'une épaisseur inférieure à l'épaisseur d'une couche unique de contact de paroi de poche appropriée à la réalisation de soudures de la couche unique de contact sur elle-même,
      ∘ dont l'une des faces a pour fonction d'être la première interface de solidarisation avec l'interface de solidarisation du film contact monocouche ou avec une première interface d'un autre film fonctionnel multicouche de structure identique ou non,
      ∘ dont l'autre des faces a pour fonction d'être une seconde interface de solidarisation avec une interface de solidarisation d'une couche fonctionnelle adjacente,
   ▪ et comprenant au moins une couche fonctionnelle dont au moins une couche barrière aux gaz non dégradable à elle seule ou par association à une couche protectrice ;
et on solidarise le film contact monocouche et le film fonctionnel multicouche, l'une des faces du film contact monocouche formant interface étant solidarisée au contact avec la face extérieure de la couche de base du film fonctionnel multicouche.

On choisit une couche de base de la même matière que celle du film contact monocouche.

On solidarise le film contact monocouche et le film fonctionnel multicouche par lamination.

Le film multicouche final comprend une matière choisie pour être au contact du produit biopharmaceutique, sans dégradation du film et du produit biopharmaceutique, et à être soudable sur elle-même, en deux couche laminées appartenant au film contact monocouche et au film multicouche intermédiaire.

Selon une réalisation, la matière constitutive du film contact monocouche est choisie dans la famille comprenant le polyéthylène (PE) et notamment le polyéthylène à basse densité linéaire (LLDPE), le polyéthylène vinyle acétate (EVA), le polypropylène (PP), l'éthylène-tétrafluoroéthylène (ETFE) le polyfluorure de vinylidène (PVDF).

L'épaisseur du film contact monocouche est inférieure à 150 microns.

Selon une réalisation, le film fonctionnel multicouche comprend une pluralité de couches fonctionnelles superposées, chacune solidarisée à la ou aux couches adjacentes.

Selon une réalisation, les couches fonctionnelles sont choisies pour leur fonction de flexibilité, de robustesse, de manipulation, d'opacité ou au contraire de transparence.

Selon une réalisation, les matériaux constitutifs de la ou des couches fonctionnelles sont choisis dans la famille comprenant le polyéthylène (PE) et notamment le polyéthylène à basse densité linéaire (LLDPE) ou le polyéthylène téréphtalate (PET), un polyamide (PA), le polyéthylène vinyle acétate (EVA), l'éthylène-alcool vinylique (EVOH), le styrène éthylène butadiène-styrène (SEBS), le polyéthylène téréphtalate glycol (PETG...), le polyfluorure de vinylidène (PVDF) ou encore l'aluminium et les matériaux équivalents, dans le cadre de l'application considérée.

Selon une réalisation, les couches - ou agrégations de couches - du film fonctionnel multicouche sont associées, en fonction des matériaux employés, par coextrusion ou lamination.

Selon une réalisation, le film fonctionnel multicouche est formé de plusieurs sous-films fonctionnels multicouche ayant chacun les caractéristiques de structure d'un film fonctionnel multicouche.

Selon une réalisation, le film fonctionnel multicouche comporte, associé à une couche de base de LLDPE, une couche d'EVOH, une couche de PA et une couche de PET qui constitue la couche extérieure du film fonctionnel multicouche une fois associé au film monocouche en LLDPE.

Selon une réalisation, le film fonctionnel multicouche comporte, associé à une couche de base de LLDPE, une couche de PE.

Selon une réalisation, le film fonctionnel multicouche comporte, associé à une couche de base de LLDPE, une couche d'EVOH, une couche de PA, deux couches de LLDPE et une couche en matériau biodégradable qui constitue la couche extérieure du film fonctionnel multicouche.

Selon une réalisation, le film fonctionnel multicouche comporte, associé à une couche de base de LLDPE, une couche en matériau biodégradable, deux couches de LLDPE, une couche d'EVOH et une couche de PA qui constitue la couche extérieure du film fonctionnel multicouche.

Selon une réalisation, le film fonctionnel multicouche comporte, associé à une couche de base de LLDPE, une couche d'aluminium qui constitue la couche extérieure du film fonctionnel multicouche.

Selon une réalisation, le film fonctionnel multicouche comporte, associé à une couche de base de LLDPE, une couche d'aluminium, deux couches de LLDPE et une couche de PEEK qui constitue la couche extérieure du film fonctionnel multicouche.

Selon une réalisation, le film fonctionnel multicouche comporte, associé à une couche de base de PE, une couche d'EVA, une couche d'EVOH, une couche d'EVA et une couche de PE qui constitue la couche extérieure du film fonctionnel multicouche.

Selon une réalisation, le film fonctionnel multicouche comporte, associé à une couche de base de LLDPE, une couche d'EVOH, une couche de LLDPE et une couche de PE qui constitue la couche extérieure du film fonctionnel multicouche.

L'invention concerne donc également film multicouche final de paroi de poche - poche comportant des soudures (3) au moins sur elle-même et destinée à être emplie de produit biopharmaceutique -, comprenant un film contact monocouche, un film fonctionnel multicouche, le film contact monocouche et le film fonctionnel multicouche étant solidarisés l'un avec l'autre.

Le film multicouche final de paroi fabriqué par ce procédé comprend par conséquent une matière choisie pour être au contact du produit biopharmaceutique, sans dégradation du film et du produit biopharmaceutique, et à être soudable sur elle-même, et à se trouver en deux couche laminées appartenant au film contact monocouche et au film fonctionnel multicouche.

L'invention concerne en outre une poche du type comportant une paroi formant enveloppe et des soudures au moins sur elle-même, destinée à être emplie de produit biopharmaceutique, caractérisée par le fait que la paroi est un film multicouche final.

En ce qui concerne la poche, la face de contact de sa paroi avec le produit biopharmaceutique est la face libre du film contact monocouche.

Un agencement d'une structure de fabrication d'une pluralité de films multicouche finals de paroi de poche tels qu'ils ont été décrits, comprend :
▪ au moins un site de fabrication de film contact, dans lequel est fabriqué au moins film contact monocouche,
▪ au moins un site de fabrication de film fonctionnel, dans lequel est fabriquée une pluralité de films fonctionnels multicouche,
▪ au moins un site de solidarisation film contact - film fonctionnel, dans lequel du film contact monocouche fabriqué dans un site de fabrication de film contact et du film fonctionnel multicouche fabriqué dans un site de fabrication de film fonctionnel sont solidarisés l'un avec l'autre.

Selon une réalisation, l'agencement comprend au moins un site de fabrication de couche du film fonctionnel, dans lequel est fabriquée au moins une couche du film fonctionnel, associé fonctionnellement à au moins un site de fabrication de film fonctionnel comportant cette couche. Selon les cas, un site de fabrication de couche du film fonctionnel et un site de fabrication de film fonctionnel sont communs ou distincts.

Selon les réalisations, un site de fabrication de film contact et un site de solidarisation film contact - film fonctionnel sont communs ou distincts.

Selon une caractéristique, un site de fabrication de couche du film fonctionnel ou un site de fabrication de film fonctionnel comprend au moins une unité d'extrusion, d'extrusion soufflage, de coextrusion, de lamination.

Selon une caractéristique, un site de solidarisation film contact - film fonctionnel comprend au moins une unité de lamination de film.

Selon une caractéristique, l'agencement comprend également au moins un site de fabrication de poches à partir de film multicouche final. En particulier, un site de solidarisation film contact - film fonctionnel et un site de fabrication de poches à partir de film multicouche final sont communs.

On décrit maintenant plusieurs modes de réalisation de l'invention à l'aide des dessins, dans lesquels :
- La figure 1 est une vue en perspective d'une poche à laquelle est destiné un film multicouche final de paroi.
- La figure 2 est une vue en coupe d'un film multicouche final de paroi de poche selon une représentation symbolique.
- Les figures 3A, 3B, 3C, 3D sont quatre vues en coupe illustrant différentes réalisations de films fonctionnels multicouche.
- Les figures 4A, 4B, 4C sont trois schémas en coupe de différentes variantes de films multicouche finals, les films fonctionnels multicouche étant formés de plusieurs sous-films fonctionnels multicouche.
- Les figures 5A à 5J sont dix schémas en coupe de différentes variantes de films multicouche finals.

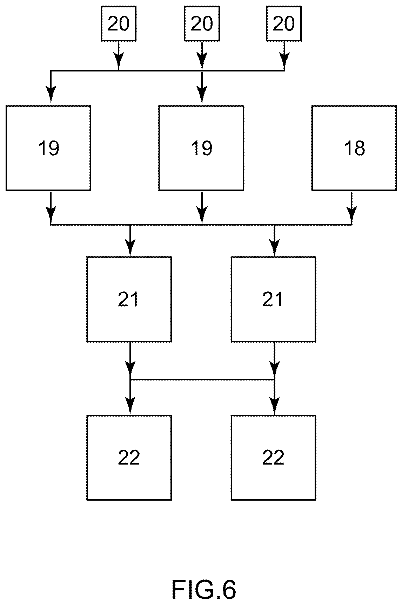

- La figure 6 est une vue schématique d'un agencement d'une structure de fabrication d'une pluralité de films multicouche finals de paroi de poche.

Une poche 1 telle que celle concernée ici est du type comportant une paroi 2 continue, formant une enveloppe, et des soudures 3 de la paroi 2 sur elle-même pour la fermer, ou à l'endroit d'un - ou de plusieurs - organe fonctionnel 4, dont au moins un port (entrée ou sortie), et, le cas échéant, un ou plusieurs dispositifs de mélange, aération...

Une telle poche 1 est destinée à être emplie de produit biopharmaceutique pour la préparation, la conservation, le transport ou l'utilisation de ce produit.

La paroi 2 présente une face extérieure 5, en contact avec l'environnement extérieur de la poche 1, et une face intérieure 6, avec laquelle est en contact le produit pharmaceutique emplissant la poche 1.

Cette poche est une poche 3D.

La paroi 2 est réalisée en un film multicouche final 7. On qualifie ce film de final parce que, en tant que tel, il constitue la paroi 2, et ce par opposition au film contact monocouche 8 et au film fonctionnel multicouche 9 qui sont intégrés dans le film final 7, et que l'on peut qualifier, pour cette raison d'intermédiaire. Ainsi, les qualificatifs de « final » et « d'intermédiaire » doivent être compris relativement au degré d'avancement de l'élaboration du film 7 utilisé pour constituer la paroi 2 de la poche 1.

Un tel film multicouche final 7 comprend plusieurs couches superposées et associées chacune à celle, ou aux deux, avec laquelle, ou lesquelles, elle est adjacente, chacune de ces couches étant en une matière choisie pour les propriétés qu'elle possède et qui sont recherchées pour le film multicouche final.

Le terme « superposé » appliqué à deux couches (ou agrégations de couches), comme le terme « superposition », doit être compris comme signifiant que ces couches (ou agrégations de couches) sont disposées l'une sur l'autre directement ou moyennant le cas échéant une couche d'interface de liaison, sans restriction s'agissant de celle des couches (ou agrégations de couches) située au dessus ou en dessous de l'autre, la position dans l'espace de l'ensemble formé par ces deux couches étant a *priori* quelconque.

Le terme « associé » appliqué à deux couches (ou agrégations de couches) doit être compris comme signifiant que ces deux couches (ou agrégations de couches) sont rendues solidaires entre elles de façon à former un ensemble cohérent, soit directement soit, si la solidarisation mutuelle directe des deux couches (ou agrégations de couches) n'est pas possible à raison des matériaux qui les constituent respectivement, moyennant une couche d'interface de liaison et d'association. L'homme du métier sait quels matériaux peuvent être solidarisés mutuellement directement et ceux qui nécesssitent une couche d'interface de liaison et d'association et le matériau constitutif de cette couche. Pour cette raison et afin de simplifier la description, celle-ci ne mentionne pas l'éventuelle existence d'une telle couche d'interface de liaison et d'association, même si celle-ci est nécessaire et prévue, la présence d'une couche d'interface de liaison et d'association appropriée étant alors et en effet implicite et à la portée de l'homme du métier.

Le terme « adjacent » appliqué à deux couches (ou agrégations de couches) doit être compris comme signifiant que ces deux couches (ou agrégations de couches) sont contigües, directement ou moyennant le cas échéant une interface de liaison.

La superposition de couches constitutive du film multicouche final 7 permet à ce dernier de remplir les exigences attendues en ce qui concerne la paroi 2 et donc la poche 1.

On sait qu'une telle paroi 2 doit avoir une propriété barrière à haut degré d'étanchéité aux gaz. Elle doit être apte d'un point de vue mécanique à contenir le produit biopharmaceutique se trouvant dans la poche 1 et dont le volume peut être important. Elle doit également être apte à éviter les interactions indésirables avec l'environnement ou le produit biopharmaceutique, par exemple lors de la fabrication, du transport ou du stockage. Elle doit être propre, notamment au regard des particules ou sous l'angle biologique. Elle doit être non dégradable et présenter une haute résistance chimique. Elle doit être apte, également, à permettre que l'élaboration ou la conservation du produit biopharmaceutique soit assurée avec sécurité. Elle doit pouvoir être soudée, compte tenu de la présence des soudures 3 et du au moins un organe fonctionnel 4. Elle doit pouvoir être pliée et dépliée, aisément et sans détérioration. Elle doit présenter des qualités appropriées au regard de l'adhérence ou de la souplesse. Selon les cas, elle doit avoir une certaine transparence ou au contraire une certaine opacité.

Le film multicouche final 7 comprend - et est constitué - un film contact monocouche 8 et un film fonctionnel multicouche 9.

Le film contact monocouche 8 et le film fonctionnel multicouche 9 sont solidarisés l'un avec l'autre, en l'espèce par lamination.

On décrit maintenant plus spécialement le film contact monocouche 8.

Le film contact monocouche 8 est constitué d'une matière choisie pour présenter trois aptitudes.

D'abord, la matière choisie doit avoir l'aptitude d'entrer dans la constitution d'un film multicouche final 7 destiné à une paroi 2 de poche 1.

Ensuite, cette matière doit avoir l'aptitude d'être au contact du produit biopharmaceutique, sans dégradation du film 7, 8 et du produit biopharmaceutique.

Enfin, cette matière doit avoir l'aptitude d'être soudable sur elle-même, pour pouvoir réaliser les soudures 3.

Le film contact 8 est monocouche et constitué de cette matière ainsi choisie.

Cette matière constitutive est choisie dans la famille comprenant le polyéthylène (PE) et notamment le polyéthylène à basse densité linéaire (LLDPE), le polyéthylène vinyle acétate (EVA), le polypropylène (PP), l'éthylène-tétrafluoroéthylène (ETFE) le polyfluorure de vinylidène (PVDF) et les matériaux équivalents, dans le cadre de l'application considérée.

Le film contact monocouche 8 est d'une épaisseur inférieure à l'épaisseur qu'aurait une couche unique de contact d'un film multicouche final qui serait approprié à la réalisation de soudures 3 de la couche unique de contact sur elle-même.

L'épaisseur du film contact monocouche 8 est inférieure à 150 microns.

Le film contact monocouche 8 a deux faces, respectivement la face 10 et la face 11.

La face 10 a pour fonction d'être une interface de solidarisation avec une première interface 13 du film fonctionnel multicouche 9.

La face 11 a pour fonction finale de constituer la face de contact du film multicouche final 7 et de la paroi 2 de la poche 1 avec le produit biopharmaceutique, c'est-à-dire sa face intérieure 6.

Un tel film contact monocouche 8 peut être réalisé par extrusion.

Un tel film contact entre dans la composition des films multicouche finals 7, dans la diversité des compositions envisageables. Le film contact monocouche 8 est donc commun, au regard de sa nature, à tout ces films 7. Pour cette raison, le film contact monocouche 8 peut être fabriqué en quantité importante par les fabricants de poches 1 et sous la maîtrise de ces fabricants.

On décrit maintenant plus spécialement le film fonctionnel multicouche 9.

Tout d'abord, il est entendu que la qualification de fonctionnel donnée au film 9 ne signifie pas, a contrario, que le film contact monocouche 8 n'aurait aucune fonction. Elle signifie seulement que c'est le film 9 qui assure la diversité des fonctions recherchées pour le film final 7.

Le film fonctionnel 9, à la différence du film contact monocouche 8, est multicouche.

Le film fonctionnel multicouche 9 comprend au moins une couche de base 12, de la même matière que le film contact monocouche 8 ou d'une matière qui peut être associée à celle du film contact monocouche 8 par lamination.

La couche de base 12 est, comme le film contact monocouche 8, d'une épaisseur inférieure à l'épaisseur qu'aurait une couche unique de contact d'un film multicouche final qui serait approprié à la réalisation de soudures 3 de la couche unique de contact sur elle-même.

L'épaisseur de la couche de base 12 est inférieure à 50 microns.

En général, l'épaisseur de la couche de base 12 est plus faible que celle du film contact 8.

La couche de base 12 du film fonctionnel multicouche 9 a deux faces, respectivement la face 13 et la face 14.

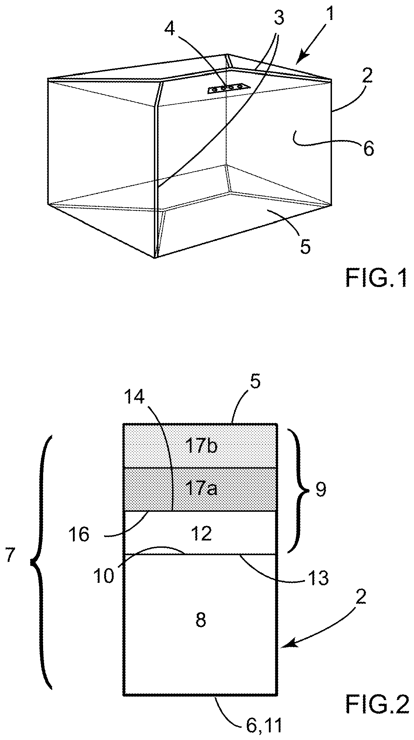

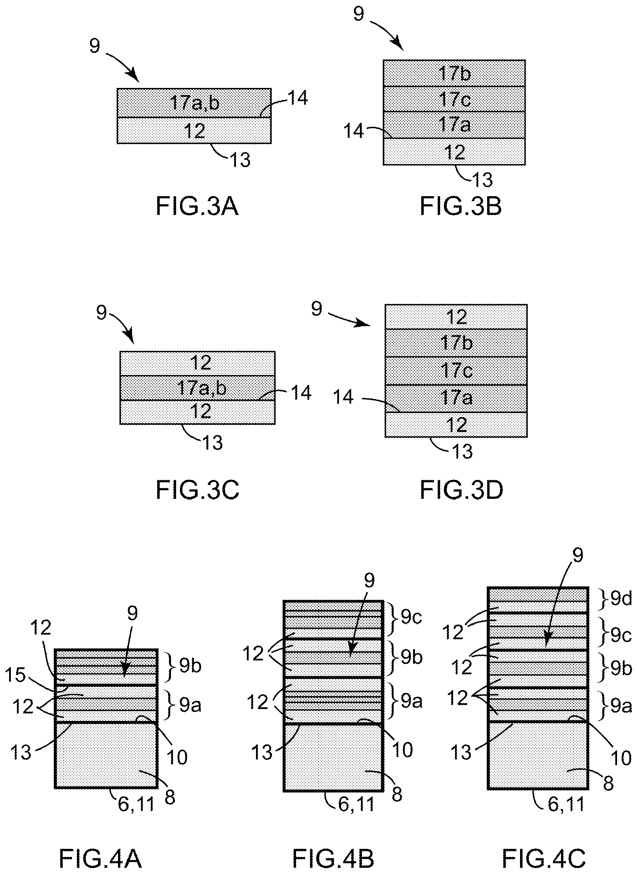

La face 13 a pour fonction d'être une première interface de solidarisation avec l'interface 10 du film contact monocouche 8 (figure 2) ou avec une première interface 15 d'un autre film multicouche fonctionnel 9a, de structure identique ou non (figures 4A, 4B et 4C).

Lorsque la face 13 a pour fonction d'être une première interface de solidarisation avec l'interface 10 du film contact monocouche 8, la face 14 a pour fonction d'être une seconde interface de solidarisation avec une interface de solidarisation 16 de la couche fonctionnelle adjacente 17a.

D'autre part, le film fonctionnel multicouche 9 comprend également au moins une couche 17b, barrière aux gaz, non dégradable à elle seule ou par association à une couche protectrice, cette fonction étant toujours exigée.

Le film fonctionnel multicouche 9 comprend, outre la couche de base 12, une pluralité de n couches fonctionnelles 17i, superposées, chacune solidarisée à une ou à deux couches adjacentes 17h et 17j.

Ces couches fonctionnelles 17i sont déterminées et choisies pour la fonction recherchée dans le film multicouche final 7. Des exemples de telles fonctions sont la flexibilité, la robustesse, l'aptitude à la manipulation, l'opacité ou au contraire la transparence ou encore la biodégradabilité. Cette liste n'est qu'exemplative et nullement limitative.

Les matériaux constitutifs des couches fonctionnelles 17i sont choisis de manière à remplir la fonction recherchée. Par exemple, ces matériaux sont choisis dans la famille comprenant le polyéthylène (PE) et notamment le polyéthylène à basse densité linéaire (LLDPE) ou le polyéthylène téréphtalate (PET), un polyamide (PA), le polyéthylène vinyle acétate (EVA), l'éthylène-alcool vinylique (EVOH), le styrène éthylène butadiène-styrène (SEBS), le polyéthylène téréphtalate glycol (PETG...), le polyfluorure de vinylidène (PVDF) ou encore l'aluminium et les matériaux équivalents, dans le cadre de l'application considérée.

Les couches constitutives du film fonctionnel multicouche 9, à savoir la couche de base 12 et les n couches fonctionnelles 17i, dont la couche adjacente 16a et la couche barrière aux gaz 17b, sont solidarisées de toute manière appropriée, en fonction des matériaux employés, tel que coextrusion ou lamination, le cas échéant avec présence d'une couche d'interface de liaison et d'association appropriée.

Ce qui est vrai des couches fonctionnelles 17i l'est également d'agrégations de couches fonctionelles.

Les films fonctionnels multicouche 9 peuvent faire l'objet d'une grande variété de réalisation, selon le nombre de couches fonctionnelles 17i, leurs natures et leurs épaisseurs.

Dans la réalisation de la figure 2, le film fonctionnel multicouche 9 comprend la couche de base 12 et deux couches fonctionnelles 17a et 17b. Une telle réalisation n'est qu'exemplative du concept inventif.

Dans la réalisation de la figure 3A, encore plus simple, le film fonctionnel multicouche 9 comprend la couche de base 12 et une seule couche fonctionnelle, 17a, b.

Dans la réalisation de la figure 3B le film fonctionnel multicouche 9 comprend la couche de base 12 et trois couches fonctionnelles 17a, 17b et 17c.

Dans la réalisation de la figure 3C le film fonctionnel multicouche 9 comprend une première couche de base 12, une couche fonctionnelle 17a,b et une seconde couche de base 12 qui a ou non la même épaisseur que la première couche de base 12.

Dans la réalisation de la figure 3D le film fonctionnel multicouche 9 comprend une première couche de base 12, trois couches fonctionnelles 17a, 17b et 17c et une seconde couche de base 12 qui a ou non la même épaisseur que la première couche de base 12.

Dans d'autres réalisations, le film fonctionnel multicouche 9 est formé de plusieurs sous-films fonctionnels multicouche 9a, 9b..., ayant chacun les caractéristiques de structure d'un film fonctionnel multicouche tel 9 que cela a été décrit précédemment.

Bien entendu, une seule couche de celles constitutives des sous-films fonctionnels multicouche 9a, 9b... fait fonction de couche de base 12, destinée à être solidarisée au film contact monocouche 8, comme cela a été décrit précédemment.

Les sous-films fonctionnels multicouche 9a, 9b... sont solidarisés entre eux par lamination pour former un tout structurel.

Ainsi, on peut envisager une réalisation modulaire des films fonctionnels 9, ce qui est avantageux eu regard du processus de production.

Dans la réalisation de la figure 4A, le film fonctionnel multicouche 9 est formé de deux sous-films fonctionnels multicouche 9a et 9b. L'un comporte en tout trois couches et l'autre en tout quatre couches. Ces deux sous-films 9a et 9b sont solidarisés entre eux par l'entremise de deux couches externes 12.

Dans la réalisation de la figure 4B, le film fonctionnel multicouche 9 est formé de trois sous-films fonctionnels multicouche 9a, 9b et 9c, comportant, pour celui 9a destiné à être associé au film contact monocouche 8, cinq couches, pour celui 9b qui lui est adjacent, trois couches et pour celui 9c qui lui est adjacent quatre couches. Comme précédemment, les sous-films 9a, 9b et 9c sont solidarisés entre eux par l'entremise de deux couches externes 12.

Dans la réalisation de la figure 4C, le film fonctionnel multicouche 9 est formé de quatre sous-films fonctionnels multicouche 9a, 9b, 9c et 9d, comportant, pour celui destiné à être associé au film contact monocouche 8, trois couches, pour celui qui lui est adjacent, trois couches également, pour celui qui lui est adjacent, trois couches également et pour celui qui lui est adjacent, deux couches. Comme précédemment, les sous-films 9a, 9b, 9c et 9d sont solidarisés entre eux par l'entremise de deux couches externes 12.

Le procédé de fabrication d'un film multicouche final 7 consiste à fabriquer ou disposer d'un film contact monocouche 8 et d'un film fonctionnel multicouche 9, puis de les solidariser par lamination, l'une des faces 10 du film contact monocouche 8 formant interface étant solidarisée au contact avec la face extérieure 13 de la couche de base 12 du film fonctionnel multicouche 9.

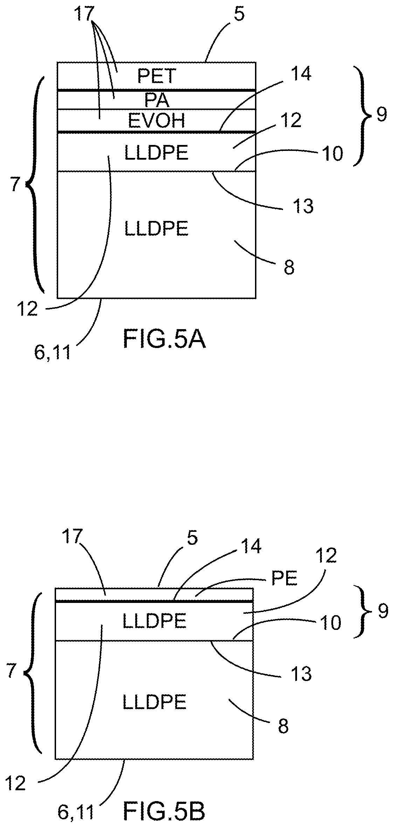

On décrit maintenant plusieurs réalisations possibles, purement exemplatives et non limitatives en relation avec les figures 5A à 5J.

Dans le cas de la figure 5A, le film fonctionnel multicouche 9 destiné à être associé à un film monocouche 8 en LLDPE, comporte, outre et associé à la couche de base 12 de LLDPE :
▪ une couche d'EVOH
▪ une couche de PA
▪ une couche de PET laquelle constitue la couche extérieure du film fonctionnel multicouche 9 une fois associé au film monocouche 8 en LLDPE.

Dans le cas de la figure 5B, le film fonctionnel multicouche 9 comporte, outre et associé à la couche de base 12 de LLDPE, une couche de PE.

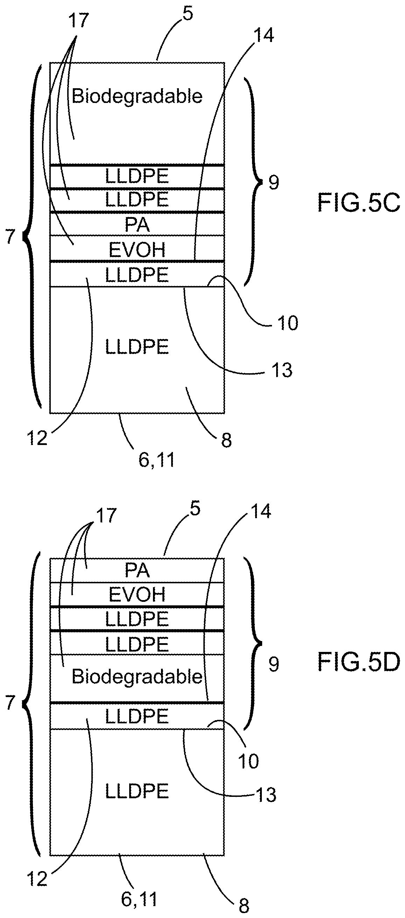

Dans le cas de la figure 5C, le film fonctionnel multicouche 9 comporte, outre et associé à la couche de base 12 de LLDPE :
▪ une couche d'EVOH
▪ une couche de PA
▪ deux couches de LLDPE
▪ une couche en matériau biodégradable (couche extérieure du film fonctionnel multicouche 9).

Dans le cas de la figure 5D, le film fonctionnel multicouche 9 comporte, outre et associé à la couche de base 12 de LLDPE :
▪ une couche en matériau biodégradable
▪ deux couches de LLDPE
▪ une couche d'EVOH
▪ une couche de PA (couche extérieure du film fonctionnel multicouche 9).

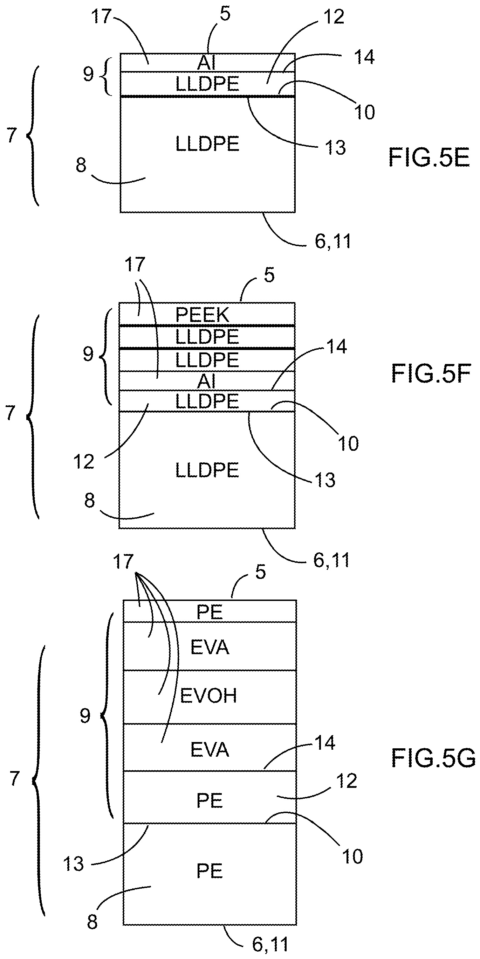

Dans le cas de la figure 5E, le film fonctionnel multicouche 9 comporte, outre et associé à la couche de base 12 de LLDPE, une couche d'aluminium (couche extérieure du film fonctionnel multicouche 9).

Dans le cas de la figure 5F, le film fonctionnel multicouche 9 comporte, outre et associé à la couche de base 12 de LLDPE :
▪ une couche d'aluminium
▪ deux couches de LLDPE
▪ une couche de PEEK (couche extérieure du film fonctionnel multicouche 9).

Dans le cas de la figure 5G, le film fonctionnel multicouche 9 comporte, outre et associé à la couche de base 12 de PE :
▪ une couche d'EVA
▪ une couche d'EVOH
▪ une couche d'EVA
▪ une couche de PE (couche extérieure du film fonctionnel multicouche 9).

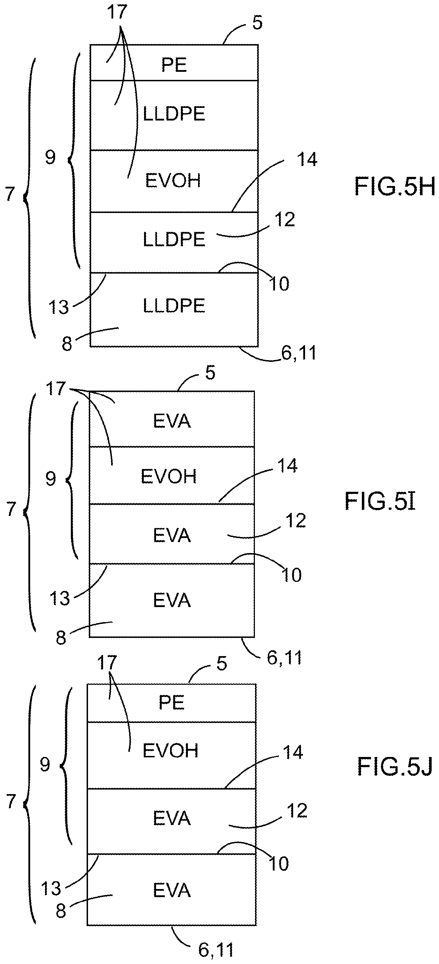

Dans le cas de la figure 5H, le film fonctionnel multicouche 9 comporte, outre et associé à la couche de base 12 de LLDPE :
▪ une couche d'EVOH
▪ une couche de LLDPE
▪ une couche de PE (couche extérieure du film fonctionnel multicouche 9).

Dans le cas de la figure 5I, le film fonctionnel multicouche 9 comporte, outre et associé à la couche de base 12 d'EVA:
▪ une couche d'EVOH
▪ une couche d'EVA (couche extérieure du film fonctionnel multicouche 9).

Dans le cas de la figure 5J, le film fonctionnel multicouche 9 comporte, outre et associé à la couche de base 12 d'EVA:
▪ une couche d'EVOH
▪ une couche de PE (couche extérieure du film fonctionnel multicouche 9).

Un agencement d'une structure de fabrication d'une pluralité de films multicouche finals 7 de paroi de poche comprend tout d'abord au moins un site de fabrication 18 de film contact, dans lequel est fabriqué au moins un film contact monocouche 8.

L'agencement comprend ensuite au moins un site de fabrication 19 de film fonctionnel dans lequel est fabriquée une pluralité de films fonctionnels multicouche 9. Selon les cas, les films de couches fonctionnelles 17 sont fabriqués sur le site 19 ou bien il est prévu un ou plusieurs sites de fabrication 20 de films de couche fonctionnelle 17, dans lesquels sont fabriqués du film constitutif des couches fonctionnelles 17.

De tels sites 19, 20, comprennent une ou plusieurs unités d'extrusion, d'extrusion soufflage, de coextrusion, de lamination, ces unités étant mises en oeuvre en fonction des besoins.

Les sites 18, 19 et 20 peuvent être, en tout ou en partie, distincts ou communs.

L'agencement comprend également au moins un site 21 de solidarisation film contact - film fonctionnel, dans lequel du film contact monocouche 8 fabriqué dans un site 18 et du film fonctionnel multicouche 9 fabriqué dans un site 19 sont solidarisés l'un avec l'autre pour constituer du film multicouche final 7.

De tels sites 21 comprennent une ou plusieurs unités de lamination de film.

L'agencement comprend enfin au moins un site 22 de fabrication de poches 1 à partir de film multicouche final 7.

Les sites 21 et 22 peuvent être, en tout ou en partie, distincts ou communs.

Il convient de noter que l'épaisseur du film contact monocouche 8 et de la couche de base 12 du film fonctionnel multicouche 9 peuvent dépendre de l'utilisation visée par le film multicouche final 7, d'une part, et des paramètres retenus pour la production du film contact monocouche 8 et de la couche de base 12 (matériau, machine, etc.).

Dans l'hypothèse où le film contact monocouche 8 et la couche de base 12 du film fonctionnel multicouche 9 sont réalisés en PE, il est ainsi possible d'utiliser :
▪ un film contact monocouche 8 présentant une épaisseur de 250 microns et une couche de base 12 du film fonctionnel multicouche présentant une épaisseur de 5 microns.

De manière similaire, dans l'hypothèse où le film contact monocouche 8 et la couche de base 12 du film fonctionnel multicouche 9 sont réalisés en EVA, il est possible d'utiliser :
▪ un film contact monocouche 8 présentant une épaisseur de 355 microns et une couche de base 12 du film fonctionnel multicouche présentant une épaisseur de 5 microns.

## Revendications

1. Procédé de fabrication d'une poche, comprenant la fabrication d'un film multicouche final (7) de paroi (2) de poche (1) - poche (1) comportant des soudures (3) au moins sur elle-même et destinée à être emplie de produit biopharmaceutique -, dans lequel :
d'une part, on fabrique ou dispose d'un film contact monocouche (8) :
▪ constitué d'une matière choisie apte à :
∘ entrer dans la constitution du film multicouche final (7) de paroi (2) de poche (1),
∘ être au contact du produit biopharmaceutique, sans dégradation du film (7) et du produit biopharmaceutique,
∘ être soudable sur elle-même,
▪ d'une épaisseur inférieure à l'épaisseur d'une couche unique de contact de paroi de poche appropriée à la réalisation de soudures de la couche unique de contact sur elle-même,
▪ dont l'une des faces a pour fonction d'être une interface de solidarisation avec une première interface de solidarisation du film fonctionnel multicouche (9),
▪ dont l'autre des faces a pour fonction finale de constituer la face de contact du film multicouche final avec le produit biopharmaceutique ;
d'autre part, on fabrique ou dispose d'un film fonctionnel multicouche (9) :
▪ comprenant au moins une couche de base (12) de la même matière que le film contact monocouche (8), et d'une épaisseur inférieure à l'épaisseur d'une couche unique de contact de paroi de poche appropriée à la réalisation de soudures de la couche unique de contact sur elle-même,
∘ dont l'une des faces a pour fonction d'être la première interface de solidarisation avec l'interface de solidarisation du film contact monocouche ou avec une première interface d'un autre film fonctionnel multicouche (9a) de structure identique ou non,
∘ dont l'autre des faces a pour fonction d'être une seconde interface de solidarisation avec une interface de solidarisation d'une couche fonctionnelle adjacente,
▪ et comprenant au moins une couche fonctionnelle dont au moins une couche barrière aux gaz non dégradable à elle seule ou par association à une couche protectrice ;
et on solidarise par lamination le film contact monocouche (8) et le film fonctionnel multicouche (9), l'une des faces du film contact monocouche (8) formant interface étant solidarisée au contact avec la face extérieure de la couche de base (12) du film fonctionnel multicouche (9),
le film multicouche final (7) comprenant une matière choisie pour être au contact du produit biopharmaceutique, sans dégradation du film et du produit biopharmaceutique, et à être soudable sur elle-même, en deux couche laminées appartenant au film contact monocouche (8) et au film fonctionnel multicouche (9),
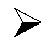 l'épaisseur de la couche de base (12) étant inférieure à 50µm,
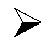 l'épaisseur de la couche de base (12) étant plus faible que celle du film contact monocouche (8),
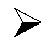 l'épaisseur du film contact monocouche (8) étant inférieure à 150 microns,
et comprenant la fabrication de la poche formant une enveloppe et comportant une paroi (2) continue qui est formée par ledit film multicouche final (7) comprenant :
- la fermeture de la poche par réalisation de soudures de ladite paroi sur elle-même pour fermer la poche,
- l'emplissage de la poche par un produit biopharmaceutique,
- la poche étant une poche 3D.

2. Procédé de fabrication d'une poche (1) selon la revendication 1, dans lequel la matière constitutive du film contact monocouche (8) est choisie dans la famille comprenant le polyéthylène (PE) et notamment le polyéthylène à basse densité linéaire (LLDPE), le polyéthylène vinyle acétate (EVA), le polypropylène (PP), l'éthylène-tétrafluoroéthylène (ETFE) le polyfluorure de vinylidène (PVDF).

3. Procédé de fabrication d'une poche (1) selon l'une quelconque des revendications 1 à 2 dans lequel le film fonctionnel multicouche (9) comprend une pluralité de couches fonctionnelles superposées (17a, 17b...), chacune solidarisée à la ou aux couches adjacentes.

4. Procédé de fabrication d'une poche (1) selon l'une quelconque des revendications 1 à 3, dans lequel les couches fonctionnelles (17a, 17b...) sont choisies pour leur fonction de flexibilité, de robustesse, de manipulation, d'opacité ou au contraire de transparence.

5. Procédé de fabrication d'une poche (1) selon l'une quelconque des revendications 1 à 4, dans lequel les matériaux constitutifs de la ou des couches fonctionnelles sont choisis dans la famille comprenant le polyéthylène (PE) et notamment le polyéthylène à basse densité linéaire (LLDPE) ou le polyéthylène téréphtalate (PET), un polyamide (PA), le polyéthylène vinyle acétate (EVA), l'éthylène-alcool vinylique (EVOH), le styrène éthylène butadiène-styrène (SEBS), le polyéthylène téréphtalate glycol (PETG...), le polyfluorure de vinylidène (PVDF) ou encore l'aluminium et les matériaux équivalents, dans le cadre de l'application considérée.

6. Procédé de fabrication d'une poche (1) selon l'une quelconque des revendications 1 à 5, dans lequel les couches - ou agrégations de couches - du film fonctionnel multicouche (9) sont associées, en fonction des matériaux employés, par coextrusion ou lamination.

7. Procédé de fabrication d'une poche (1) selon l'une quelconque des revendications 1 à 6, dans lequel le film fonctionnel multicouche (9) est formé de plusieurs sous-films fonctionnels multicouche (9a, 9b...) ayant chacun les caractéristiques de structure d'un film fonctionnel multicouche (9).

8. Procédé de fabrication d'une poche (1) selon l'une quelconque des revendications 1 à 7, dans lequel le film fonctionnel multicouche (9) comporte, associé à une couche de base (12) de LLDPE, une couche d'EVOH, une couche de PA et une couche de PET qui constitue la couche extérieure du film fonctionnel multicouche 9 une fois associé au film monocouche 8 en LLDPE.

9. Procédé de fabrication d'une poche (1) selon l'une quelconque des revendications 1 à 7, dans lequel le film fonctionnel multicouche (9) comporte, associé à une couche de base (12) de LLDPE, une couche de PE.

10. Procédé de fabrication d'une poche (1) selon l'une quelconque des revendications 1 à 7, dans lequel le film fonctionnel multicouche (9) comporte, associé à une couche de base (12) de LLDPE, une couche d'EVOH, une couche de PA, deux couches de LLDPE et une couche en matériau biodégradable qui constitue la couche extérieure du film fonctionnel multicouche (9).

11. Procédé de fabrication d'une poche (1) selon l'une quelconque des revendications 1 à 7, dans lequel le film fonctionnel multicouche (9) comporte, associé à une couche de base (12) de LLDPE, une couche en matériau biodégradable, deux couches de LLDPE, une couche d'EVOH et une couche de PA qui constitue la couche extérieure du film fonctionnel multicouche (9).

12. Procédé de fabrication d'une poche (1) selon l'une quelconque des revendications 1 à 7, dans lequel le film fonctionnel multicouche (9) comporte, associé à une couche de base (12) de LLDPE, une couche d'aluminium qui constitue la couche extérieure du film fonctionnel multicouche (9).

13. Procédé de fabrication d'une poche (1) selon l'une quelconque des revendications 1 à 7, dans lequel le film fonctionnel multicouche (9) comporte, associé à une couche de base (12) de LLDPE, une couche d'aluminium, deux couches de LLDPE et une couche de PEEK qui constitue la couche extérieure du film fonctionnel multicouche (9).

14. Procédé de fabrication d'une poche (1) selon l'une quelconque des revendications 1 à 7, dans lequel le film fonctionnel multicouche (9) comporte, associé à une couche de base (12) de PE, une couche d'EVA, une couche d'EVOH, une couche d'EVA et une couche de PE qui constitue la couche extérieure du film fonctionnel multicouche (9).

15. Procédé de fabrication d'une poche (1) selon l'une quelconque des revendications 1 à 7, dans lequel le film fonctionnel multicouche (9) comporte, associé à une couche de base (12) de LLDPE, une couche d'EVOH, une couche de LLDPE et une couche de PE qui constitue la couche extérieure du film fonctionnel multicouche (9).

16. Poche (1) du type comportant une paroi (2) formant enveloppe et des soudures (3) au moins sur elle-même, destinée à être emplie de produit biopharmaceutique, **caractérisée par le fait que** la paroi (2) est un film multicouche final (7) de paroi de poche, ledit film multicouche final (7) de paroi (2) de poche (1) - poche (1) comportant des soudures (3) au moins sur elle-même et destinée à être emplie de produit biopharmaceutique -, comprenant :
▪ un film contact monocouche (8),
▪ un film fonctionnel multicouche (9),
▪ le film contact monocouche (8) et le film fonctionnel multicouche (9) étant solidarisés l'un avec l'autre par lamination,
ledit film contact monocouche (8), spécialement destiné, une fois solidarisé audit film fonctionnel multicouche (9), à constituer ledit film multicouche final (7) de paroi (2) de poche (1) - poche (1) comportant des soudures (3) au moins sur elle-même et destinée à être emplie de produit biopharmaceutique :
▪ constitué d'une matière choisie apte à :
∘ entrer dans la constitution d'un film multicouche final (7) de paroi de poche,
∘ être au contact du produit biopharmaceutique, sans dégradation du film (7) et du produit biopharmaceutique,
∘ être soudable sur elle-même,
▪ d'une épaisseur inférieure à l'épaisseur d'une couche unique de contact de paroi de poche appropriée à la réalisation de soudures de la couche unique de contact sur elle-même,
▪ dont l'une des faces a pour fonction d'être une interface de solidarisation avec une première interface de solidarisation du film fonctionnel multicouche (9),
▪ dont l'autre des faces a pour fonction finale de constituer la face de contact du film multicouche final avec le produit biopharmaceutique,
ledit film fonctionnel multicouche (9), spécialement destiné, une fois solidarisé audit film contact monocouche (8), à constituer un film multicouche final (7) de paroi (2) de poche (1) - poche (1) comportant des soudures (3) au moins sur elle-même et destinée à être emplie de produit biopharmaceutique:
▪ comprenant au moins une couche de base (12) de la même matière que le film contact monocouche (8) et d'une épaisseur inférieure à l'épaisseur d'une couche unique de contact de paroi de poche appropriée à la réalisation de soudures de la couche unique de contact sur elle-même,
∘ dont l'une des faces a pour fonction d'être la première interface de solidarisation avec l'interface de solidarisation du film contact monocouche ou avec une première interface d'un autre film fonctionnel multicouche (9a) de structure identique ou non,
∘ dont l'autre des faces a pour fonction d'être une seconde interface de solidarisation avec une interface de solidarisation d'une couche fonctionnelle adjacente,
▪ et comprenant au moins une couche fonctionnelle dont au moins une couche barrière aux gaz non dégradable à elle seule ou par association à une couche protectrice,
le film multicouche final (7) comprenant une matière choisie pour être au contact du produit biopharmaceutique, sans dégradation du film et du produit biopharmaceutique, et à être soudable sur elle-même, en deux couche laminées appartenant au film contact monocouche (8) et au film fonctionnel multicouche (9),
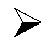 l'épaisseur de la couche de base (12) étant inférieure à 50µm,
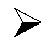 l'épaisseur de la couche de base (12) étant plus faible que celle du film contact monocouche (8),
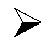 l'épaisseur du film contact monocouche (8) étant inférieure à 150 microns,
la poche étant une poche 3D.

## Patentansprüche

1. Verfahren zur Herstellung eines Beutels, umfassend die Herstellung einer mehrschichtigen Abschlussfolie (7) einer Wand (2) eines Beutels (1) - wobei der Beutel (1) wenigstens an sich selbst Schweißnähte (3) aufweist und dazu ausgebildet ist, mit einem biopharmazeutischen Produkt gefüllt zu werden -, wobei:
einerseits eine einschichtige Kontaktfolie (8) hergestellt oder angebracht wird:
▪ welche aus einem Material gebildet ist, das dazu geeignet ist:
∘ in die Zusammensetzung der mehrschichtigen Abschlussfolie (7) einer Wand (2) eines Beutels (1) einzugehen,
∘ in Kontakt mit dem biopharmazeutischen Produkt zu stehen, ohne die Folie (7) oder das biopharmazeutische Produkt zu beeinträchtigen,
∘ an sich selbst verschweißbar zu sein,
▪ mit einer Dicke, welche geringer ist als die Dicke einer einzelnen Kontaktschichtschicht der Beutelwand, geeignet für die Ausführung von Schweißnähten der einzelnen Kontaktschicht an sich selbst,
▪ wobei eine der Seiten die Funktion hat, eine Verbindungsschnittstelle mit einer ersten Verbindungsschnittstelle der mehrschichtigen Funktionsfolie (9) zu sein,
▪ wobei die andere der Seiten die Endfunktion hat, die Kontaktseite der mehrschichtigen Abschlussfolie mit dem biopharmazeutischen Produkt zu bilden;
andererseits eine mehrschichtige Funktionsfolie (9) hergestellt oder angebracht wird:
▪ welche wenigstens eine Basisschicht (12) aus demselben Material wie die einschichtige Kontaktfolie (8) aufweist, mit einer Dicke, welche geringer ist als die Dicke einer einzelnen Kontaktschicht der Wand des Beutels, geeignet für die Ausführung von Schweißnähten der einzelnen Kontaktschicht an sich selbst,
∘ wobei eine der Seiten die Funktion hat, die erste Verbindungsschnittstelle zu der Verbindungsschnittstelle der einschichtigen Kontaktfolie oder mit einer ersten Schnittstelle einer anderen mehrschichtigen Funktionsfolie (9a) mit identischer nicht identischer Struktur zu bilden,
∘ wobei die andere der Seiten die Funktion hat, eine zweite Verbindungsschnittstelle zu einer Verbindungsschnittstelle einer benachbarten funktionellen Schicht zu bilden,
▪ und umfassend wenigstens eine funktionelle Schicht, darunter wenigstens eine nicht abbaubare Gasbarriere-Schicht, allein oder in Zuordnung zu einer Schutzschicht;
wobei durch Laminierung die einschichtige Kontaktfolie (8) und die mehrschichtige funktionelle Folie (9) verbunden werden, wobei eine der Seiten der eine Schnittstelle bildenden einschichtigen Kontaktfolie (8) in Kontakt mit der Außenseite der Basisschicht (12) der mehrschichtigen funktionellen Folie (9) verbunden wird,
wobei die mehrschichtige Abschlussfolie (7) ein Material umfasst, welches dazu gewählt ist, mit dem biopharmazeutischen Produkt in Kontakt zu stehen, ohne die Folie oder das biopharmazeutischen Produkt zu beeinträchtigen, und an sich selbst verschweißbar zu sein, in zwei laminierten Schichten, die zu der einschichtigen Kontaktfolie (8) und der mehrschichtigen funktionellen Folie (9) zugehörig sind,
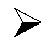 wobei die Dicke der Basisschicht (12) kleiner 50 µm ist,
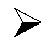 wobei die Dicke der Basisschicht (12) geringer ist als diejenige der einschichtigen Kontaktfolie (8),
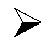 wobei die Dicke der einschichtigen Kontaktfolie (8) kleiner 150 Mikron ist,
und umfassend die Herstellung des Beutels, welcher eine Hülle bildet und eine fortlaufende Wand (2) umfasst, die durch die abschließende mehrschichtige Folie (7) gebildet wird, umfassend:
- das Verschließen des Beutels durch die Fertigung von Schweißnähten der Wand an sich selbst zum Verschließen des Beutels,
- das Füllen des Beutels mit einem biopharmazeutischen Produkt,
- wobei der Beutel ein 3D-Beutel ist.

2. Verfahren zur Herstellung eines Beutels (1) nach Anspruch 1, bei welchem das Material der einschichtigen Kontaktfolie (8) aus der Gruppe gewählt wird, welche Polyethylen (PE) und insbesondere Polyethylen mit niedriger Dichte (LLDPE), Polyethylen-Vinylacetat (EVA), Polypropylen (PP), Ethylentetrafluorethylen (ETFE) und Polyvinylidenfluorid (PVDF) umfasst.

3. Verfahren zur Herstellung eines Beutels (1) nach einem der Ansprüche 1 bis 2, bei welchem die mehrschichtige funktionelle Folie (9) eine Mehrzahl von übereinander angeordneten funktionellen Schichten (17a, 17b...) umfasst, wobei jede mit der oder den benachbarten Schichten verbunden wird.

4. Verfahren zur Herstellung eines Beutels (1) nach einem der Ansprüche 1 bis 3, bei welchem die funktionellen Schichten (17a, 17b...) aufgrund ihrer Funktion der Flexibilität, Robustheit, Handhabbarkeit, Undurchsichtigkeit oder hingegen Transparenz gewählt werden.

5. Verfahren zur Herstellung eines Beutels (1) nach einem der Ansprüche 1 bis 4, bei welchem die Materialen der funktionellen Schicht oder Schichten aus der Gruppe gewählt werden, welche Polyethylen (PE) und insbesondere Polyethylen mit niedriger Dichte (LLDPE), Polyethylenterephthalat (PET), Polyamid (PA), Polyethylen-Vinylacetat (EVA), Ethylenvinylalkohol (EVOH), Styrol-Ethylen-Butadien-Styrol (SEBS), Polyethylenterephthalat-Glycol (PETG...), Polyvinylidenfluorid (PVDF) oder Aluminium und äquivalente Materialien im Rahmen der angestrebten Anwendung umfasst.

6. Verfahren zur Herstellung eines Beutels (1) nach einem der Ansprüche 1 bis 5, bei welchem die Schichten - oder Schichtaggregationen - der mehrschichtigen funktionellen Folie (9) abhängig von den verwendeten Materialien durch Koextrusion oder Laminierung verbunden werden.

7. Verfahren zur Herstellung eines Beutels (1) nach einem der Ansprüche 1 bis 6, bei welchem die mehrschichtige funktionelle Folie (9) aus mehreren mehrschichtigen funktionellen Unterfolien (9a, 9b...) gebildet wird, welche jeweils die Strukturmerkmale einer mehrschichtigen funktionellen Folie (9) aufweisen.

8. Verfahren zur Herstellung eines Beutels (1) nach einem der Ansprüche 1 bis 7, bei welchem die mehrschichtige funktionelle Folie (9) in Verbindung mit einer LLDPE-Basisschicht (12) eine EVOH-Schicht, eine PA-Schicht und eine PET-Schicht umfasst, die die äußere Schicht der mehrschichtigen funktionellen Folie (9) bildet sobald diese mit der einschichtigen LLDPE-Folie (8) verbunden ist.

9. Verfahren zur Herstellung eines Beutels (1) nach einem der Ansprüche 1 bis 7, bei welchem die mehrschichtige funktionelle Folie (9) in Verbindung mit einer LLDPE-Basisschicht (12) eine PE-Schicht umfasst.

10. Verfahren zur Herstellung eines Beutels (1) nach einem der Ansprüche 1 bis 7, bei welchem die mehrschichtige funktionelle Folie (9) in Verbindung mit einer LLDPE-Basisschicht (12) eine EVOH-Schicht, eine PA-Schicht und zwei LLDPE-Schichten sowie eine Schicht aus biologisch abbaubarem Material umfasst, die die äußere Schicht der mehrschichtigen funktionellen Folie (9) bilden.

11. Verfahren zur Herstellung eines Beutels (1) nach einem der Ansprüche 1 bis 7, bei welchem die mehrschichtige funktionelle Folie (9) in Verbindung mit einer LLDPE-Basisschicht (12) eine Schicht aus biologisch abbaubarem Material, zwei LLDPE-Schichten, eine EVOH-Schicht und eine PA-Schicht umfasst, die die äußere Schicht der mehrschichtigen funktionellen Folie (9) bilden.

12. Verfahren zur Herstellung eines Beutels (1) nach einem der Ansprüche 1 bis 7, bei welchem die mehrschichtige funktionelle Folie (9) in Verbindung mit einer LLDPE-Basisschicht (12) eine Aluminiumschicht umfasst, die die äußere Schicht der mehrschichtigen funktionellen Folie (9) bildet.

13. Verfahren zur Herstellung eines Beutels (1) nach einem der Ansprüche 1 bis 7, bei welchem die mehrschichtige funktionelle Folie (9) in Verbindung mit einer LLDPE-Basisschicht (12) eine Aluminiumschicht, zwei LLDPE-Schichten und eine PEEK-Schicht umfasst, die die äußere Schicht der mehrschichtigen funktionellen Folie (9) bildet.

14. Verfahren zur Herstellung eines Beutels (1) nach einem der Ansprüche 1 bis 7, bei welchem die mehrschichtige funktionelle Folie (9) in Verbindung mit einer PE-Basisschicht (12) eine EVA-Schicht, eine EVOH-Schicht, eine EVA-Schicht und eine PE-Schicht umfasst, die die äußere Schicht der mehrschichtigen funktionellen Folie (9) bilden.

15. Verfahren zur Herstellung eines Beutels (1) nach einem der Ansprüche 1 bis 7, bei welchem die mehrschichtige funktionelle Folie (9) in Verbindung mit einer PE-Basisschicht (12) eine EVOH-Schicht, eine LLDPE-Schicht und eine PE-Schicht umfasst, die die äußere Schicht der mehrschichtigen funktionellen Folie (9) bilden.

16. Beutel (1) eines Typs, der eine Wand (2) aufweist, die eine Hülle bildet und Schweißnähte (3) wenigstens an sich selbst aufweist und dazu ausgebildet ist, mit einem biopharmazeutischen Produkt gefüllt zu werden, **dadurch gekennzeichnet, dass** die Wand (2) eine mehrschichtige Abschlussfolie (7) der Beutelwand ist,
wobei die mehrschichtige Abschlussfolie (7) der Wand (2) des Beutels (1) - Beutel (1), der Schweißnähte (3) wenigstens an sich selbst aufweist und dazu ausgebildet ist, mit einem biopharmazeutischen Produkt gefüllt zu werden - umfasst:
▪ eine einschichtige Kontaktfolie (8),
▪ eine mehrschichtige Funktionsfolie (9),
▪ wobei die einschichtige Kontaktfolie (8) und die mehrschichtige Funktionsfolie (9) miteinander durch Laminierung verbunden sind,
wobei die einschichtige Kontaktfolie (8), die, sobald sie mit der mehrschichtigen funktionellen Folie (9) verbunden ist, insbesondere dazu ausgebildet ist, die mehrschichtige Abschlussfolie (7) der Wand (2) des Beutels (1) zu bilden - Beutel (1), der Schweißnähte (3) wenigstens an sich selbst aufweist und dazu ausgebildet ist, mit einem biopharmazeutischen Produkt gefüllt zu werden:
gebildet aus einem Material, das geeignet gewählt ist, um:
∘ in die Zusammensetzung der mehrschichtigen Abschlussfolie (7) einer Beutelwand einzugehen,
∘ in Kontakt mit dem biopharmazeutischen Produkt zu sein, ohne die Folie (7) oder das biopharmazeutische Produkt zu beeinträchtigen,
∘ an sich selbst verschweißbar zu sein,
▪ mit einer Dicke, welche geringer ist als die Dicke einer einzelnen Kontaktschicht der Beutelwand, geeignet für die Ausführung von Schweißnähten der einzelnen Kontaktschicht an sich selbst,
▪ wobei eine der Seiten die Funktion hat, eine Verbindungsschnittstelle mit einer ersten Verbindungsschnittstelle der mehrschichtigen Funktionsfolie (9) zu sein,
▪ wobei die andere der Seiten die Endfunktion hat, die Kontaktseite der mehrschichtigen Abschlussfolie mit dem biopharmazeutischen Produkt zu bilden,
wobei die mehrschichtige Funktionsfolie (9), die, sobald sie mit der einschichtigen Kontaktfolie (8) verbunden ist, insbesondere dazu ausgebildet ist, eine mehrschichtige Abschlussfolie (7) der Wand (2) des Beutels (1) zu bilden - Beutel (1), der Schweißnähte (3) wenigstens an sich selbst aufweist und dazu ausgebildet ist, mit einem biopharmazeutischen Produkt gefüllt zu werden:
▪ umfassend wenigstens eine Basisschicht (12) aus demselben Material wie die einschichtige Kontaktfolie (8) und mit einer Dicke, welche geringer ist als die Dicke einer einzelnen Kontaktschicht der Beutelwand geeignet für die Ausführung von Schweißnähten der einzelnen Kontaktschicht an sich selbst,
∘ wobei eine der Seiten die Funktion hat, die erste Verbindungsschnittstelle zu der Verbindungsschnittstelle der einschichtigen Kontaktfolie oder mit einer ersten Schnittstelle einer anderen mehrschichtigen Funktionsfolie (9a) mit identischer oder nicht identischer Struktur zu bilden,
∘ wobei die andere der Seiten die Funktion hat, eine zweite Verbindungsschnittstelle zu einer Verbindungsschnittstelle einer benachbarten funktionellen Schicht zu bilden,
▪ und umfassend wenigstens eine funktionelle Schicht, darunter wenigstens eine nicht abbaubare Gasbarriere-Schicht, allein oder in Zuordnung zu einer Schutzschicht;
wobei die mehrschichtige Abschlussfolie (7) ein Material umfasst, welches dazu gewählt ist, mit dem biopharmazeutischen Produkt in Kontakt zu stehen, ohne die Folie oder das biopharmazeutische Produkt zu beeinträchtigen, und an sich selbst verschweißbar zu sein, in zwei laminierten Schichten, die zu der einschichtigen Kontaktfolie (8) und der mehrschichtigen funktionellen Folie (9) zugehörig sind,
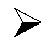 wobei die Dicke der Basisschicht (12) kleiner 50 µm ist,
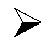 wobei die Dicke der Basisschicht (12) geringer ist als diejenige der einschichtigen Kontaktfolie (8),
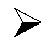 wobei die Dicke der einschichtigen Kontaktfolie (8) kleiner 150 Mikron ist, wobei der Beutel ein 3D-Beutel ist.

## Claims

1. A method for manufacturing a pouch comprising the manufacture of a final multilayer film (7) of a wall (2) of a pouch (1) - said pouch (1) comprising seams (3) at least on itself and designed to be filled with a biopharmaceutical product -, in which:
on the one hand, a monolayer contact film (8) is manufactured or available:
▪ being composed of a selected material that can:
∘ be part of the composition of the final multilayer film (7) of a wall (2) of a pouch (1),
∘ be in contact with the biopharmaceutical product, without a degradation of the film (7) and the biopharmaceutical product,
∘ be sealable on itself,
▪ with a thickness that is smaller than the thickness of a single contact layer of a pouch wall that is suitable for the production of seams of the single contact layer on itself,
▪ of which one of the surfaces has the function of being an interface for joining with a first joining interface of the multilayer functional film (9),
▪ of which the other surface has the final function of constituting the contact surface between the final multilayer film and the biopharmaceutical product;
on the other hand, a multilayer functional film (9) is manufactured or is available:
▪ comprising at least one base layer (12) made of the same material as the monolayer contact film (8), and with a thickness that is smaller than the thickness of a single contact layer of a pouch wall that is suitable for the production of seams of the single contact layer on itself,
∘ of which one of the surfaces has the function of being the first interface for joining with the joining interface of the monolayer contact film or with a first interface of another multilayer functional film (9a) that may or may not have an identical structure,
∘ of which the other surface has the function of being a second interface for joining with a joining interface of an adjacent functional layer,
▪ and comprising at least one functional layer including at least one gas-barrier layer that is non-degradable by itself or in combination with a protective layer;
and the monolayer contact film (8) and the multilayer functional film (9) are joined together, with one of the surfaces of the monolayer contact film (8) forming an interface being joined upon contact with the outside surface of the base layer (12) of the multilayer functional film (9),
the final multilayer film (7) comprising a material that is selected to be in contact with the biopharmaceutical product, without degradation of the film and the biopharmaceutical product, and to be sealable on itself, in two laminated layers that belong to the monolayer contact film (8) and to the multilayer functional film (9),
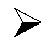 the thickness of the base layer (12) being less than 50 µm,
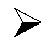 the thickness of the base layer (12) being smaller than that of the monolayer contact film (8),
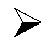 the thickness of the monolayer contact film (8) being less than 150 microns,
and comprising the manufacture of the pouch forming an envelope and having a continuous wall (2) formed by said final multilayer film (7) comprising:
- closing the pouch by producing seams of said wall on itself to close the pouch,
- filling the pouch with a biopharmaceutical product,
- the pouch being a 3D pouch.

2. The method for manufacturing a pouch (1) according to Claim 1, wherein the constituent material of the monolayer contact film (8) is selected from the family comprising polyethylene (PE) and in particular linear low-density polyethylene (LLDPE), polyethylene vinyl acetate (EVA), polypropylene (PP), ethylene tetrafluoroethylene (ETFE), and vinylidene polyfluoride (PVDF).

3. The method for manufacturing a pouch (1) according to any of Claims 1 to 2, wherein the multilayer functional film (9) comprises a number of superposed functional layers (17a, 17b...), each joined with the adjacent layer(s).

4. The method for manufacturing a pouch (1) according to any of Claims 1 to 3, wherein the functional layers (17a, 17b...) are selected for their function of flexibility, sturdiness, handling, opacity or, in contrast, transparency.

5. The method for manufacturing a pouch (1) according to any of Claims 1 to 4, wherein the constituent materials of the functional layer(s) are selected from the family comprising polyethylene (PE), and in particular linear low-density polyethylene (LLDPE) or polyethylene terephthalate (PET), a polyamide (PA), polyethylene vinyl acetate (EVA), vinyl ethylene-alcohol (EVOH), styrene ethylene butadiene-styrene (SEBS), polyethylene terephthalate glycol (PETG...), vinylidene polyfluoride (PVDF), or else aluminium and equivalent materials, within the framework of the application that is being considered.

6. The method for manufacturing a pouch (1) according to any of Claims 1 to 5, wherein the layers - or aggregations of layers - of the multilayer functional film (9) are joined, depending on the materials that are used, by co-extrusion or lamination.

7. The method for manufacturing a pouch (1) according to any of Claims 1 to 6, wherein the multilayer functional film (9) is formed by several multilayer functional sub-films (9a, 9b...), each having the structural characteristics of a multilayer functional film (9).

8. The method for manufacturing a pouch (1) according to any of Claims 1 to 7, wherein the multilayer functional film (9) comprises, joined with an LLDPE base layer (12), an EVOH layer, a PA layer, and a PET layer that constitutes the outer layer of the multilayer functional film (9) once it has been joined with the LLDPE monolayer film (8).

9. The method for manufacturing a pouch (1) according to any of Claims 1 to 7, wherein the multilayer functional film (9) comprises, joined with an LLDPE base layer (12), a PE layer.

10. The method for manufacturing a pouch (1) according to any of Claims 1 to 7, wherein the multilayer functional film (9) comprises, joined with an LLDPE base layer (12), an EVOH layer, a PA layer, two LLDPE layers, and a layer made of biodegradable material that constitutes the outer layer of the multilayer functional film (9).

11. The method for manufacturing a pouch (1) according to any of Claims 1 to 7, wherein the multilayer functional film (9) comprises, joined with an LLDPE base layer (12), a layer made of biodegradable material, two LLDPE layers, an EVOH layer, and a PA layer that constitutes the outer layer of the multilayer functional film (9).

12. The method for manufacturing a pouch (1) according to any of Claims 1 to 7, wherein the multilayer functional film (9) comprises, joined with an LLDPE base layer (12), an aluminium layer that constitutes the outer layer of the multilayer functional film (9).

13. The method for manufacturing a pouch (1) according to any of Claims 1 to 7, wherein the multilayer functional film (9) comprises, joined with an LLDPE base layer (12), an aluminium layer, two LLDPE layers, and a PEEK layer that constitutes the outer layer of the multilayer functional film (9).

14. The method for manufacturing a pouch (1) according to any of Claims 1 to 7, wherein the multilayer functional film (9) comprises, joined with a PE base layer (12), an EVA layer, an EVOH layer, an EVA layer, and a PE layer that constitutes the outer layer of the multilayer functional film (9).

15. The method for manufacturing a pouch (1) according to any of Claims 1 to 7, wherein the multilayer functional film (9) comprises, joined with an LLDPE base layer (12), an EVOH layer, an LLDPE layer, and a PE layer that constitutes the outer layer of the multilayer functional film (9).

16. A pouch (1) of the type comprising a wall (2) forming an envelope and seams (3) at least on itself, designed to be filled with biopharmaceutical product, **characterised in that** the wall (2) is a final multilayer film (7) of a pouch wall,
said final multilayer film (7) of a wall (2) of a pouch (1) - comprising seams (3) at least on itself and designed to be filled with biopharmaceutical product -, comprising:
▪ a monolayer contact film (8),
▪ a multilayer functional film (9),
▪ the monolayer contact film (8) and the multilayer functional film (9) being joined together by lamination,
said monolayer contact film (8), specially designed, once it has been joined with said multilayer functional film (9), to constitute said final multilayer film (7) of a wall (2) of a pouch (1) - said pouch (1) comprising seams (3) at least on itself and designed to be filled with biopharmaceutical product:
▪ composed of a selected material that can:
∘ be part of the composition of a final multilayer film (7) of a pouch wall,
∘ be in contact with the biopharmaceutical product, without degradation of the film (7) and the biopharmaceutical product,
∘ be sealable on itself,
▪ with a thickness that is smaller than the thickness of a single contact layer of a pouch wall that is suitable for the production of seams of the single contact layer on itself,
▪ of which one of the surfaces has the function of being an interface for joining with a first joining interface of the multilayer functional film (9),
▪ of which the other surface has as the final function of constituting the contact surface of the final multilayer film with the biopharmaceutical product,
said multilayer functional film (9), specially designed, once it has been joined with said monolayer contact film (8), to constitute a final multilayer film (7) of a wall (2) of a pouch (1) - said pouch (1) comprising seams (3) at least on itself and designed to be filled with a biopharmaceutical product:
▪ comprising at least one base layer (12) of the same material as the monolayer contact film (8) and with a thickness that is smaller than the thickness of a single contact layer of pouch wall suitable to the production of seams of the single contact layer on itself,
∘ of which one of the surfaces has the function of being the first interface for joining with the joining interface of the monolayer contact film or with a first interface of another multilayer functional film (9a) that may or may not have an identical structure,
∘ of which the other surface has the function of being a second interface for joining with an joining interface of an adjacent functional layer,
▪ and comprising at least one functional layer including at least one gas-barrier layer that is non-degradable by itself or in combination with a protective layer,
the final multilayer film (7) comprising a material that is selected to be in contact with the biopharmaceutical product, without degradation of the film and the biopharmaceutical product, and to be sealable on itself, in two laminated layers that belong to the monolayer contact film (8) and to the multilayer functional film (9),
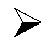 the thickness of the base layer (12) being less than 50 µm,
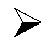 the thickness of the base layer (12) being smaller than that of the monolayer contact film (8),
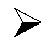 the thickness of the monolayer contact film (8) being less than 150 microns, the pouch being a 3D pouch.
